# EUROPÄISCHE PATENTSCHRIFT

(11) **EP 0 799 143 B1**
(45) Veröffentlichungstag und Bekanntmachung des Hinweises auf die Patenterteilung: **30.09.1998**
(21) Anmeldenummer: 95942125.6
(22) Anmeldetag: 12.12.1995
(51) Int. Cl.: B60T 8/88

(54) **VERFAHREN UND SCHALTUNGSANORDNUNG ZUR ÜBERWACHUNG DER FUNKTION EINER PROGRAMMGESTEUERTEN SCHALTUNG**
PROCESS AND CIRCUIT FOR MONITORING THE FUNCTIONING OF A PROGRAM-CONTROLLED CIRCUIT
PROCEDE ET CIRCUIT POUR LE CONTROLE DU FONCTIONNEMENT D'UN CIRCUIT COMMANDE PAR PROGRAMME

(30) Priorität: 23.12.1994 DE 4446314
(43) Veröffentlichungstag der Anmeldung: 08.10.1997
(73) Patentinhaber: ITT Automotive Europe GmbH, 60488 Frankfurt (DE)
(72) Erfinder: ZYDEK, Michael, D-35428 Langgöns (DE); FEY, Wolfgang, D-65527 Niedernhausen (DE)
(86) Internationale Anmeldenummer: EP9504901
(87) Internationale Veröffentlichungsnummer: WO9620103

(56) Entgegenhaltungen:
- EP-A- 0 496 509
- EP-A- 0 525 574
- FR-A- 2 606 897
- GB-A- 2 175 717
- US-A- 4 817 418

## Beschreibung

Gegenstand der Erfindung ist ein Verfahren zur Überwachung der ordnungsgemäßen Funktion einer programmgesteuerten elektronischen Schaltung, z.B. eines Microprozessors, Microcomputers, Microcontrollers oder dergl., bei dem im Arbeitstakt Datenverarbeitungsergebnisse mit unabhängig von der zu überwachenden Schaltung, d.h. von den Eingangsdaten der programmgesteuerten Schaltung und unabhängig von dem Programmlauf, in einer Überwachungsschaltung erzeugten Daten auf Übereinstimmung überprüft werden und bei dem beim Auftreten von Abweichungen, die auf eine Fehlfunktion hinweisen, ein Fehlersignal oder Abschaltsignal erzeugt wird. Schaltungsanordnungen, die auch zur Durchführung des Verfahrens geeignet sind, gehören ebenfalls zur Erfindung.

Die ordnungsgemäße Arbeitsweise von Microcomputern und anderen programmgesteuerten elektronischen Schaltungen muß bekanntlich insbesondere dann überwacht werden, wenn die Schaltungen für sicherheitskritische Regelungssysteme eingesetzt werden. Ein Beispiel für eine sicherheitskritische Anwendung ist der regelnde Eingriff in die Bremsanlage eines Kraftfahrzeuges, wie er beispielsweise zur Blockierschutzregelung, Antriebsschlupfregelung, Fahrstabilitätsregelung usw. erforderlich ist. Beim Erkennen einer Fehlfunktion der Elektronik wird bei bekannten Bremsanlagen die elektronische Regelung abgeschaltet, damit zumindest die Bremsenfunktion - wenn auch ohne Blockierschutzregelung - erhalten bleibt. Es ist auch bekannt, bei bestimmten Fehlern die Regelung nur teilweise stillzulegen, verzögert abzuschalten oder auf andere Weise in einen ungefährlicheren Zustand umzuschalten.

Für solche Überwachungsmaßnahmen ist es wesentlich, daß die Fehlfunktion schnell und mit hoher Zuverlässigkeit erkannt wird. Um dies zu erreichen, ist es aus der DE 32 34 637 C2 bereits eine Regelschaltung bekannt ist, die mit Radsensoren gewonnene Eingangsdaten redundant in einem Microcontroller sowie in einer Überwachungsschaltung auswertet. Hierzu werden die Eingangsdaten in zwei parallelen, voneinander unabhängig die Daten verarbeitenden, jedoch identisch aufgebauten und identisch programmierten, synchronisiert betriebenen Microcontrollern verarbeitet. Die Ausgangssignale der beiden Microcontroller werden dann auf Übereinstimmung überprüft. Treten Abweichungen auf, was auf eine Fehlfunktion hinweist, wird die elektronische Regelung abgeschaltet und dadurch die Bremsenfunktion sichergestellt. Die Redundanz dient allein dem Zweck, auftretende Fehler mit hoher Zuverlässigkeit zu erkennen, um in diesem Falle die Regelung ausschalten zu können. Die Ausschaltmechanismen selbst sind ebenfalls weitgehend redundant aufgebaut. Aus Sicherheitsgründen wird also ein erheblicher Aufwand in Kauf genommen.

Eine andere bekannte Schaltungsanordnung, die in der DE 41 37 124 Al beschrieben ist, sieht vor, die Sensor- bzw. Eingangssignale in zwei parallelen Microcontrollern zu verarbeiten, von denen jedoch nur einer die vollständige, aufwendige Signalverarbeitung ausführt. Der zweite Schaltkreisdient vornehmlich zur Überwachung, weshalb die Eingangssignale nach Aufbereitung und Bildung von Ableitungen mit Hilfe vereinfachter Regelalgorithmen und vereinfachter Regelphilosophie weiterverarbeitet werden. Im Vergleich zu der zuvor genannten bekannten Schaltung wird durch die vereinfachte Bearbeitung in dem Überwachungs-Microcontroller eine Aufwandverringerung erreicht.

Grundsätzlich wäre es heutzutage auch möglich, mehrere komplette Schaltungssysteme, z.B. zwei Microcomputer, auf einem einzigen Chip unterzubringen, beide mit den gleichen Eingangsinformationen zu versorgen und zur Überwachung der ordnungsgemäßen Funktion die Datenverarbeitungsergebnisse der verschiedenen Schaltungssysteme miteinander zu vergleichen. Bei einem solchen Aufbau der elektronischen Schaltung läßt sich jedoch nicht mit ausreichend hoher Sicherheit ausschließen, daß aufgrund eines Schaltungsfehlers auch dann ein korrektes Überwachungssignal (Watchdog-Signal) entsteht, wenn die Datenverarbeitungsergebnisse beider Schaltungssysteme nicht übereinstimmen bzw. ein Schaltungssystem fehlerhaft ist.

Eine "Ein-Prozessor-Lösung", also die Beschränkung auf eine einzige programmgesteuerte Schaltung mit einer Überwachungsschaltung der herkömmlichen Art, läßt erst recht kein ausreichend sicheres Erkennen von Fehlfunktionen erwarten.

Ferner ist aus der DE 40 04 782 A1 (P 6892) bereits ein ABS mit zwei Microcontrollern bekannt, die beide jeweils ein Überwachungssignal erzeugen, das ein Wechselsignal mit vorgegebener Frequenz und vorgegebenem Verlauf darstellt. Ein Sicherheitsschaltkreis vergleicht die Wechselsignale mit einer Zeitnormalen, die von einem Taktgeber abgeleitet ist, der von dem Arbeitstakt der Microcontroller unabhängig ist. Eine Veränderung des Wechselsignals führt, ebenso wie ein Ausfall der Zeitnormalen, zur Abschaltung der Blockierschutzregelung; fallen die Pulse aus dem vorgegebenen Zeitfenster, wird die Regelung abgeschaltet. Auch diese bekannte Schaltungsanordnung beruht auf der Verwendung von zwei redundant arbeitenden Microcontrollern.

Der Erfindung liegt nun die Aufgabe zugrunde, ein Verfahren der eingangs genannten Art zu entwickeln, das auch bei Beschränkung auf eine einzige programmgesteuerte Schaltung in Verbindung mit einer Überwachungsschaltung eine Fehlfunktion mit hoher Sicherheit und Zuverlässigkeit erkennen läßt, so daß ein Fehlersignal erzeugt werden kann, welches das System in einen für die Sicherheit unkritischen Zustand umschaltet oder, z.B. die Regelung einer Bremsanlage abschaltet.

Es hat sich herausgestellt, daß diese Aufgabe mit dem im Anspruch 1 beschriebenen Verfahren gelöst werden kann. Das Besondere des erfindungsgemäßen Verfahrens besteht also darin, daß im Programmlauf der zu überwachenden Schaltung Datenworte erzeugt und zu vorgegebenen Zeitpunkten zu der Überwachungsschaltung übertragen werden und daß mit Hilfe der Überwachungsschaltung der Inhalt der Datenworte sowie der Zeitpunkt des Auftretens der Datenworte mit Vorgaben, d.h. vorgegebenen Datenworten und vorgegebenem Zeitrahmen, verglichen werden.

Nach einem besonders vorteilhaften Ausführungsbeispiel der Erfindung ergeben die im Programmlauf der zu überwachenden Schaltung erzeugten Datenworte eine vorgegebene Wortfolge, d.h. eine bestimmte Folge vorgegebener Worte, die mit Hilfe der Überwachungsschaltung auf Übereinstimmung mit einer entsprechenden Vorgabe bzw. einer entsprechenden Wortfolge verglichen wird.

Erfindungsgemäß wird also anstelle der Überwachung eines einfachen "Watchdog"-Signals, nämlich eines im Arbeitstakt erzeugten Pulses, im Programmlauf bzw. Programmablauf ein definiertes Datenwort erzeugt, das inhaltlich und zeitlich mit einer Vorgabe übereinstimmen muß. Der Überwachungsschaltkreis überprüft nicht nur den Inhalt des im Programmlauf erzeugten Datenwortes, sondern auch den Zeitpunkt des Auftretens diesen Datenwortes. Es wird also sowohl das Zeitverhalten des Überwachungssignals überprüft als auch durch Auswertung des Datenwortes oder Datenwortfolge eine weitergehende Beurteilung der Funktion des Microcontrollers bzw. der zu überwachenden Schaltung ermöglicht.

Die vorgegebenen Wortfolgen werden dabei in der zu überwachenden Schaltung und in der Überwachungsschaltung zweckmäßigerweise nach unterschiedlichen Algorithmen gebildet.

Eine weitere vorteilhafte Ausführungsart der Erfindung besteht darin, daß die Überwachungsschaltung die Datenworte, mit denen die in der zu überwachenden Schaltung gebildeten Datenworte verglichen werden, einem Speicher entnimmt.

In den Unteransprüchen sind noch weitere vorteilhafte Ausführungsarten des erfindungsgemäßen Verfahrens beschrieben.

Eine Schaltungsanordnung zur Durchführung des Verfahrens nach der Erfindung umfaßt eine programmgesteuerte Schaltung sowie eine Überwachungsschaltung. Eine im Programmlauf oder -ablauf von der zu überwachenden Schaltung nach einem vorgegebenen Algorithmus erzeugte Datenwortfolge wird bei dieser Schaltung im Arbeitstakt zur Überwachungsschaltung übertragen, die einen Vergleicher enthält, der die übertragene Datenwortfolge nach Inhalt und zeitlichem Auftreten auf Übereinstimmung mit einer vorgegebenen, z.B. abgespeicherten Datenwortfolge vergleicht und ein Fehlererkennungs- und Schaltsignal hervorruft, wenn die übertragene Datenwortfolge von der vorgegebene Folge abweicht. Eine solche Schaltungsanordnung ist z.B. für eine Bremsanlage mit elektronischer Regelung geeignet, bei der der zu überwachende Schaltkreis in Form eines Ein-Chip-Microcontrollers ausgebildet ist, der zur Auswertung der mit Hilfe von Radsensoren gemessenen Eingangssignale und zur Erzeugung von Bremsdrucksteuersignalen dient.

Weitere Details der Erfindung gehen aus der folgenden Beschreibung eines Ausführungsbeispiels anhand der beigefügten Darstellungen hervor.

Es zeigen
- Fig. 1: ein Flow-Chart zur Erläuterung der prinzipiellen Arbeitsweise des erfindungsgemäßen Verfahrens und
- Fig. 2: in schematisch vereinfachter Darstellung ein Ausführungsbeispiel einer Schaltungsanordnung nach der Erfindung.

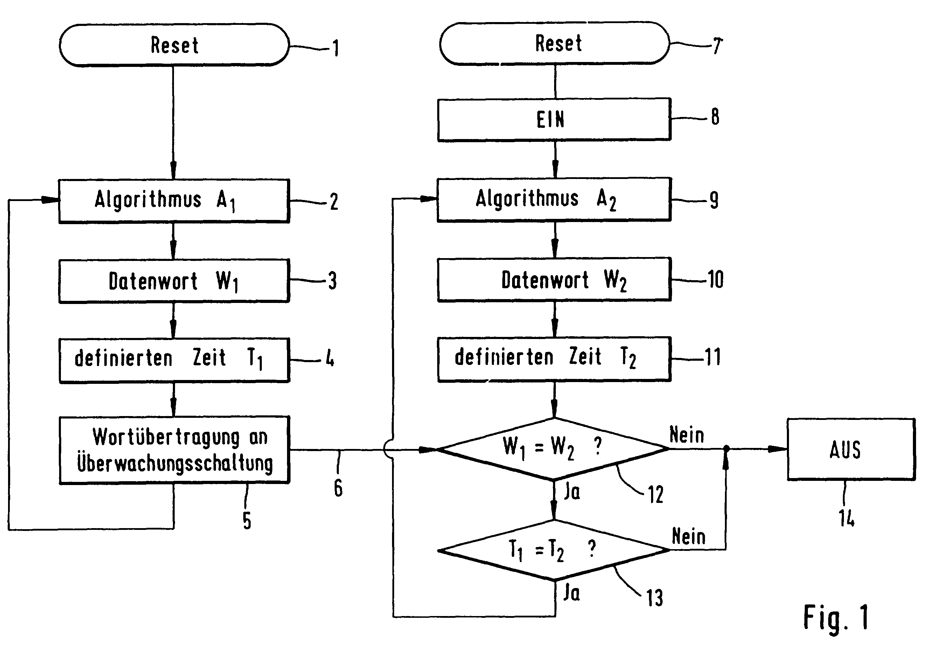

In Fig. 1 sind links in Form eines Flow-Charts oder Programmablaufplans einige Operationen 2 bis 5 dargestellt, die hier zur Berechnung einer bestimmten Datenwortfolge dienen, die für das erfindungsgemäße Überwachungsverfahren benötigt wird. Die Operationen 2 bis 5 sind als Schritte eines Unterprogramms aufzufassen, die von der zu überwachenden programmgesteuerten Schaltung jeweils über ein Startsignal "Reset" 1 ausgelöst werden. Nach einer Rechenoperation 2 auf Basis eines Algorithmus A₁ wird in dem Schritt 3 ein Wort W₁ gebildet und in dem Schritt 4 nach einer definierten Zeit T₁ weitergeleitet. Daran schließt sich im Schritt 5 eine Übertragung des Wortes W₁ zum vorgegebenen Zeitpunkt zu einer Überwachungsschaltung an. Die Wortübertragung ist durch einen Pfeil 6 symbolisiert. Das Unterprogramm mit den Schritten 2 bis 5 wird nun, da es sich um eine geschlossene Schleife handelt, wiederholt.

Die Überwachungsschaltung wird über ein "Reset" 7 gestartet. Nach dem Einschalten (8) wird in dem Schritt 9 eine Rechenoperation mit dem Algorithmus A₂ durchgeführt, worauf (10) ein Datenwort W₂ gebildet wird, das nach einer definierten Zeit T₂ (11) in einer Operation 12 mit dem übertragenen Wort W₁ verglichen wird. Stimmt das übertragene Wort W₁ mit dem in der Überwachungsschaltung ermittelten Wort W₂ überein und ist auch die Zeitbedingung T₁ = T₂ erfüllt, wird die Überwachungsprozedur fortgesetzt werden. Werden dagegen im Schritt 12 und/oder im Schritt 13 Abweichungen festgestellt, hat dies - symbolisiert durch die Operation 14, ein Abschalten der Regelung zur Folge.

Die Startsignale "Reset" 1 und "Reset" 2 werden durch das gleiche Ereignis, beispielsweise durch Einschalten der Zündung eines Kraftfahrzeug-Motors ausgelöst. Bei geeignetem Algorithmus ist dann keine weitere Synchronisation der zu überwachenden Schaltung, die die Operationen 1 bis 5 ausführt, mit der Überwachungsschaltung 7 bis 14 erforderlich.

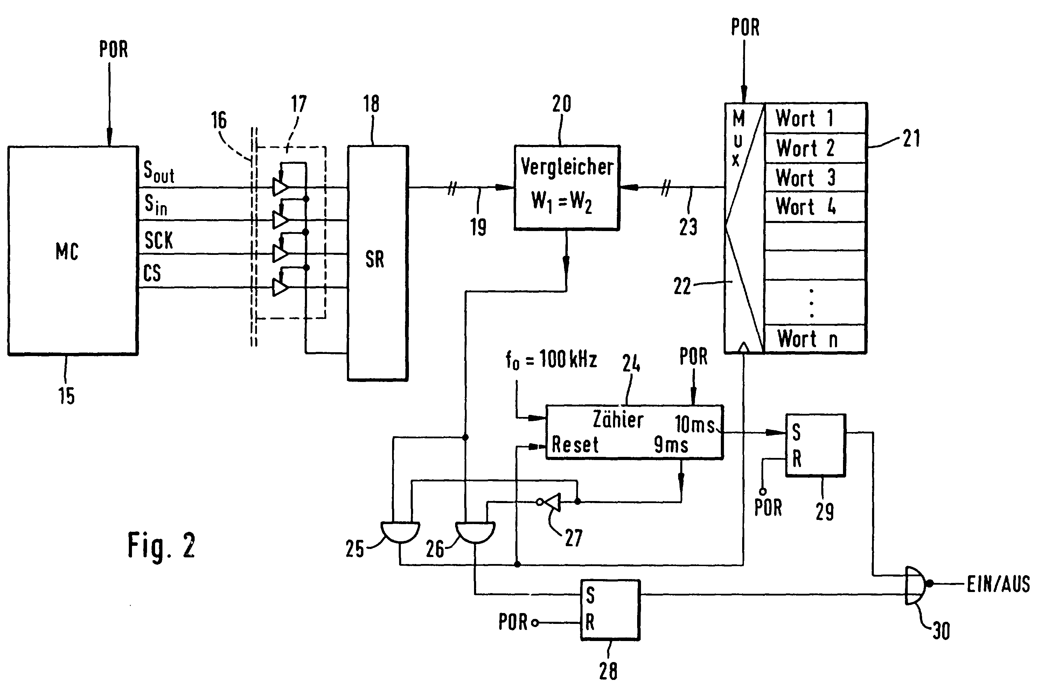

In Fig. 2 ist die zu überwachende, programmgesteuerte Schaltung, hier der Microcontroller eines ABS, mit 15 bezeichnet. Zu einer seriellen Schnittstelle 16 führen die Prozessorausgänge Sₒᵤₜ (serial out), Sᵢₙ (serial in), SCK (clock) und CS (chip select). Über diese serielle Schnittstelle 16 ist eine Überwachungsschaltung, die aus den im Anschluß an die Schnittstelle 16 rechts dargestellten Schaltungskomponenten besteht, angeschlossen.

Über einen Eingangsschalter oder "buffer" 17 werden die einzelnen Datenworte in ein serielles Schieberegister 18 übertragen und aus diesem parallel über eine Vielfachleitung 19 zu einem Vergleicher 20 weitergeleitet. In dem Vergleicher 20 wird das über die Leitung 19 zugeführte, von der zu überwachenden Schaltung 15 ausgegebene Datenwort W₁ mit einem Datenwort W₂, das einem tabellarischen Speicher 21 entnommen wird, auf Übereinstimmung verglichen. Der Speicher 21 ist über einen Multiplexer 22 und eine Vielfach-Signalleitung 23 mit dem Vergleicher 20 verbunden. Ferner gehören zu der Überwachungsschaltung ein Zähler oder Teiler 24, zwei UND-Gatter 25,26, ein Inverter 27, zwei Kippstufen 28,29 und schließlich ein ODER-Gatter mit negiertem Ausgang (NOR-Gatter), der zu einem nicht dargestellten Sicherheitsrelais führt. Bei einem Signal "1" am Ausgang des NOR-Gatters 30 ist ein Sicherheitsrelais eingeschaltet ("EIN"), weil die zu überwachende Schaltung und die Prüfschaltung in Ordnung sind. Ein Signal -"0" am Ausgang des NOR-Gatters 30 führt zur Abschaltung der Regelung.

Die Überwachungsschaltung nach Fig. 2 arbeitet wie folgt:

Nach einem Startsignal "POR" (power reset) an den reset-Eingängen der zu überwachenden Schaltung 15 und des Multiplexers 22 sowie am "POR"-Eingang des Zählers 24 herrscht folgende Situation:
- Signal "1" (EIN) am Ausgang des Gatters 30,
- der Zähler 24 ist zurückgesetzt,
- der Multiplexer 22 steht auf "Wort 1" des Speichers 21.
- Ein Datenwort W₁ ist zunächst nicht vorhanden. Folglich herrscht "0" am Ausgang des Vergleichers 20.
- Durch das "POR"-Signal wurden auch die Kippstufen 28 und 29 zurückgesetzt.

Der Arbeitstakt der zu überwachenden Schaltung und der Überwachungsschaltung beträgt im folgenden Beispiel 10 ms.

Innerhalb der von dem Teiler 24 vorgegebenen Zeitspanne von 0 bis 9 ms muß am Ausgang des Vergleichers 20 das Signal "0" bleiben, da in dieser Zeitspanne das UND-Gatter 26 freigegeben ist und ein Signal 1 am Ausgang des Vergleichers 20 die Kippstufe 28 setzen und damit über das ODER-Gatter 30 das Sicherheitsrelais ausschalten würde.

Innerhalb des Zeitraumes von 9 bis 10 ms muß nun die Bedingung W₁ = W₂ erfüllt werden, damit ein Ausgangssignal 1 am Ausgang des Vergleichers 20 entsteht. Folgendes geschieht:
- Über das ODER-Gatter 25 und den "Reset"-Eingang wird der Zähler 24 angesteuert und dadurch auf "0" zurückgesetzt.
- Der Multiplexer 22 übernimmt ein neues Datenwort aus dem Speicher 21.
- Der Ausgang des Vergleichers 20 wird wieder "0".
- Die Kippstufe 28 wird über das UND-Gatter 26 wieder freigegeben.
- Der Zyklus beginnt von neuem.

Wird die Bedingung W₁ = W₂ nicht erfüllt, so daß das Ausgangssignal des Vergleichers 20 den Wert "0" behält, läuft der Zähler 24 über. Dies hat zur Folge, daß nach 10 ms die Kippstufe 29 gesetzt und dadurch über das ODER-Gatter 30 das Sicherheitsrelais AUSgeschaltet wird, symbolisiert durch das Ausgangssignal AUS in Fig. 2.

Die Überwachungsschaltung nach Fig. 2 stellt ein besonders einfaches Ausführungsbeispiel dar. Natürlich gibt es noch andere Verknüpfungsmöglichkeiten.

Die aus bestimmten Datenworten bestehende Datenwortfolge kann auf sehr unterschiedliche Weise in der programmgesteuerten Schaltung 15, die überwacht werden soll, gebildet werden. Zweckmäßig ist es z.B., das Ergebnis der in regelmäßigen Abständen in einer programmgesteuerten Schaltung der hier in Rede stehenden Art ablaufenden Prüfroutinen zur Bildung der Datenwortfolgen auszuwerten. Eine andere Möglichkeit besteht darin, aus einem Speicher, der zu der überwachenden Schaltung gehört, bestimmte Worte aufzurufen und diese Worte mit den Worten im Speicher 21 der Prüfschaltung zu vergleichen.

Erfindungsgemäß wird also auf sehr einfache Weise eine Überwachung eines Microprozessors, Microcontrollers oder einer anderen programmgesteuerten Schaltung erreicht. Die Ausgabe einer bestimmten Datenwortfolge erfordert keinen Mehraufwand. Die beschriebene Überwachungsschaltung läßt sich, wie das erläuterte Beispiel zeigt, mit wenigen Schaltkreisen verwirklichen.

## Patentansprüche

1. Verfahren zur Überwachung der ordnungsgemäßen Funktion einer programmgesteuerten Schaltung (1 - 5; 15), z.B. eines Microprozessors, Microcomputers, Microcontrollers oder dergl., bei dem im Arbeitstakt Datenverarbeitungsergebnisse mit unabhängig von der zu überwachenden Schaltung, d.h. unabhängig von den Eingangsdaten der programmgesteuerten Schaltung (1 - 5; 15) und unabhängig von deren Programmlauf, in einer Überwachungsschaltung (7 - 14; 17 -30) erzeugten Daten auf Übereinstimmung überprüft werden und bei dem beim Auftreten von Abweichungen, die auf eine Fehlfunktion hinweisen, ein Fehlersignal oder Abschaltsignal erzeugt wird, wobei im Programmlauf der zu überwachenden Schaltung (1 - 5; 15) Datenworte erzeugt und zu vorgegebenen Zeitpunkten zu der Überwachungsschaltung (7 - 14; 17 -30) übertragen werden und wobei mit Hilfe der Überwachungsschaltung der Inhalt der Datenworte sowie der Zeitpunkt des Auftretens der Datenworte mit Vorgaben, d.h. vorgegebenen Datenworten und vorgegebenem Zeitrahmen, verglichen werden.

2. Verfahren nach Anspruch 1, dadurch **gekennzeichnet**, daß die im Programmlauf der zu überwachenden Schaltung (1 - 5; 15) erzeugten Datenworte eine vorgegebene Wortfolge, d.h. eine vorgegebene Folge von vorgegebenen Worten, ergeben, die mit Hilfe der Überwachungsschaltung (7 - 14; 17 - 30) auf Übereinstimmung mit einer entsprechenden Vorgabe verglichen wird.

3. Verfahren nach Anspruch 2, dadurch **gekennzeichnet**, daß die vorgegebenen Wortfolgen in der zu überwachenden Schaltung (1 - 5; 15) und in der Überwachungsschaltung (7 - 14; 17 - 30) nach unterschiedlichen Algorithmen gebildet werden.

4. Verfahren nach einem oder mehreren der Ansprüche 1 bis 3, dadurch **gekennzeichnet**, daß die Überwachungsschaltung (7 - 14; 17 - 30) die Datenworte, mit denen die in der zu überwachenden Schaltung (1 - 5; 15) gebildeten Datenworte verglichen werden, einem Speicher (21) entnimmt.

5. Verfahren nach einem oder mehreren der Ansprüche 1 bis 4, dadurch **gekennzeichnet**, daß die Überwachungsschaltung (7 - 14; 17 - 30) die Zeitspannen zwischen zwei aufeinanderfolgenden Datenworten mit vorgegebenen Zeitspannen auf Übereinstimmung vergleicht.

6. Verfahren nach einem oder mehreren der Ansprüche 1 bis 5, dadurch **gekennzeichnet**, daß das Erzeugen der vorgegebenen Wort folge innerhalb der zu überwachenden Schaltung (1 - 5; 15) und innerhalb der Überwachungsschaltung (7 - 14; 17 - 30)m durch regelmäßig wiederkehrende Ereignisse, z.B. durch Einschalten der Zündung eines Kfz-Motors, gestartet wird.

7. Schaltungsanordnung zur Verfahren zur Überwachung der ordnungsgemäßen Funktion einer programmgesteuerten Schaltung, z.B. eines Microprozessors, Microcomputers, Microcontrollers oder dergl., mit einer unabhängigen Überwachungsschaltung und mit einem Vergleicher, der im Arbeitstakt Datenverarbeitungsergebnisse mit in der Überwachungsschaltung erzeugten Daten auf Übereinstimmung überprüft und beim Auftreten von Abweichungen, die auf eine Fehlfunktion hinweisen, ein Fehlersignal oder Abschaltsignal hervorruft, dadurch **gekennzeichnet**, daß die Überwachungsschaltung (7 - 14; 17 -30) unabhängig von den Eingangsdaten der programmgesteuerten Schaltung (1 - 5; 15) und unabhängig von deren Programmlauf ist, daß die programmgesteuerten Schaltung (1 - 5; 15) im Programmlauf nach einem vorgegebenen Algorithmus (A₁) eine Datenwortfolge (W₁) erzeugt, die im Arbeitstakt der zu überwachenden Schaltung zur Überwachungsschaltung (7 - 14; 17 -30) übertragen wird, daß der Vergleicher (20) die übertragene Datenwortfolge (W₁) nach Inhalt und zeitlichem Auftreten auf Übereinstimmung mit einer vorgegebenen Datenwortfolge (W₂) vergleicht, und daß die Überwachungsschaltung (7 - 14; 17 - 30), wenn die übertragene Datenwortfolge (W₁) von der vorgegebenen Folge (W₂) abweicht, ein Fehlererkennungs- und Abschaltsignal hervorruft.

8. Schaltungsanordnung nach Anspruch 7, dadurch **gekennzeichnet**, daß diese für eine Bremsanlage mit elektronischer Regelung, z.B. ABS, ASR, FSR, vorgesehen ist und daß die zu überwachende Schaltung (1 - 5; 15) in Form eines Ein-Chip-Microcontrollers ausgebildet ist, der zur Auswertung von mit Hilfe von Radsensoren gewonnenen Eingangssignalen und zur Erzeugung von Bremsdrucksteuersignalen dient.

## Claims

1. Process of monitoring the correct function of a program-controlled circuit (1 - 5; 15), such as a microprocessor, microcomputer, microcontroller, or the like, wherein in the working cycle data processing results are checked for correlation with data which are produced in a monitoring circuit (7 - 14; 17 - 30) independently of the circuit to be monitored, i.e., independently of the input data of the program-controlled circuit (1 - 5; 15), and independently of the latter's program run, and wherein if deviations indicative of a malfunction occur, an error signal or disabling signal is generated, wherein data words are produced in the program run of the circuit to be monitored (1 - 5; 15) and are transmitted to the monitoring circuit (7 - 14; 17 - 30) at predetermined times, and wherein the content of the data words and the time of the appearance of the data words is compared with specifications, i.e., predetermined data words and predetermined time intervals, by way of the monitoring circuit.

2. Process as claimed in claim 1,
**characterized** in that the data words produced in the program run of the circuit to be monitored (1 - 5; 15) provide a predetermined sequence of words, i.e., a defined sequence of predetermined words, which is compared for correlation with a corresponding specification by way of the monitoring circuit (7 - 14; 17 - 30).

3. Process as claimed in claim 2,
**characterized** in that the predetermined sequences of words in the circuit to be monitored (1 - 5; 15) and in the monitoring circuit (7 - 14; 17 - 30) are produced according to different algorithms.

4. Process as claimed in any one or more of claims 1 to 3,
**characterized** in that the monitoring circuit (7 - 14; 17 - 30) takes from a memory (21) the data words with which the data words produced in the circuit to be monitored (1 - 5; 15) are compared.

5. Process as claimed in any one or more of claims 1 to 4,
**characterized** in that the monitoring circuit (7 - 14; 17 - 30) compares the periods between two successive data words with predetermined periods for correlation.

6. Process as claimed in any one or more of claims 1 to 5,
**characterized** in that the production of the predetermined word sequence within the circuit to be monitored (1 - 5; 15) and within the monitoring circuit (7 - 14; 17 - 30) is started by regularly recurrent events, such as switching on the ignition of an automotive vehicle engine.

7. Circuit arrangement for monitoring the correct function of a program-controlled circuit, such as a microprocessor, microcomputer, microcontroller, or the like, including an independent monitoring circuit and a comparator which checks data processing results in the working cycle for correlation with data generated in the monitoring circuit and, if deviations indicative of a malfunction occur, causes an error signal or disabling signal,
**characterized** in that the monitoring circuit (7 - 14; 17 - 30) is independent of the input data of the program-controlled circuit (1 - 5; 15) and independent of the latter's program run, in that the program-controlled circuit (1 - 5; 15) produces in the program run a data word sequence (W₁), according to a predetermined algorithm (A₁), which is transmitted to the monitoring circuit (7 - 14; 17 - 30) in the working cycle of the circuit to be monitored, in that the comparator (20) compares the transmitted data word sequence (W₁) in terms of contents and timely appearance for correlation with a predetermined data word sequence (W₂), and in that the monitoring circuit (7 - 14; 17 - 30) causes an error identifying and disabling signal if the transmitted data word sequence (W₁) differs from the predetermined sequence (W₂).

8. Circuit arrangement as claimed in claim 7,
**characterized** in that the circuit arrangement is intended for use in a brake system with electronic control, for example, ABS systems, traction slip control systems, driving stability control systems, and in that the circuit to be monitored (1 - 5; 15) is configured as a single-chip microcontroller which is used to evaluate input signals produced by wheel sensors and to generate braking pressure control signals.

## Revendications

1. Procédé pour contrôler le fonctionnement correct d'un circuit (1-5;15) commandé par programme, par exemple d'un microprocesseur, d'un micro-ordinateur, d'un microcontrôleur ou analogue, dans lequel un contrôle de résultat de traitement de données est exécuté à la cadence de travail pour déterminer si elles coïncident avec des données produites indépendamment du circuit à contrôler, c'est-à-dire indépendamment des données d'entrée du circuit (1-5;15) commandé par programme et indépendamment du déroulement du programme de ce circuit, et produite dans un circuit de contrôle (7-14;17-30), et dans lequel lors de l'apparition d'écarts qui indiquent une fonction erronée, un signal d'erreur ou un signal de débranchenent est produit, auquel cas lors du déroulement du programme dans le circuit (1-5;15) à contrôler, des mots de données sont produits et sont transmis à des instants prédéterminés au circuit de contrôle (7-14;17-30), tandis que le contenu des mots de données ainsi que l'instant d'apparition des mots de données peuvent être comparés, à l'aide du circuit de contrôle, à des prescriptions, c'est-à-dire des mots de données prédéterminés et des fenêtres temporelles prédéterminées.

2. Procédé selon la revendication 1, caractérisé en ce que les mots de données, qui sont produits lors du déroulement du programme du circuit à contrôler (1-5;15), fournissent une succession prédéterminée de mots, c'est-à-dire une suite prédéterminée de mots prédéterminés, qui sont comparés, à l'aide du circuit de contrôle (7-14;17-30) à une prescription correspondante, pour voir si elles coïncident avec cette dernière.

3. Procédé selon la revendication 2, caractérisé en ce que les suites prédéterminées de mots sont formées dans le circuit à contrôler (1-5;15) et dans le circuit de contrôle (7-14;17-30) en fonction d'algorithmes différents.

4. Procédé selon une ou plusieurs des revendications 1 à 3, caractérisé en ce que le circuit de contrôle (7-14;17-30) prélève d'une mémoire (21) des mots de données auxquels sont comparés les mots de données formés dans le circuit à contrôler (1-5;15).

5. Procédé selon une ou plusieurs des revendications 1 à 4, caractérisé en ce que le circuit de contrôle (7-14;17-30) compare les intervalles de temps entre deux mots de données successifs à des intervalles de temps prédéterminés, pour déterminer s'il y a coïncidence.

6. Procédé selon une ou plusieurs des revendications 1 à 5, caractérisé en ce que la production de la suite prédéterminée de mots à l'intérieur du circuit à contrôler (1-5;15) et à l'intérieur du circuit de contrôle (7-14;17-30) est déclenchée par des résultats se répétant régulièrement, par exemple par le branchement de l'allumage du moteur d'un véhicule automobile.

7. Montage pour la mise en oeuvre du procédé pour contrôler le fonctionnement correct d'un circuit commandé par programme, par exemple d'un microprocesseur ou d'un micro-ordinateur, d'un microcontrôleur ou analogue, comportant un circuit de contrôle indépendant et un comparateur, qui, à la cadence de travail, contrôle des résultats de traitement de données à des données produites dans le circuit de contrôle, pour déterminer s'il y a coïncidence et, lors de l'apparition d'écarts qui indiquent une fonction erronée, produit un signal d'erreur ou un signal de débranchement, caractérisé en ce que le circuit de contrôle (7-14;17-30) est indépendant des données d'entrée du circuit (1-5;15) commandées par le programme et est indépendant du déroulement de son programme, que le circuit (1-5;15) commandé par programme produit, pendant le déroulement du programme, selon un algorithme prédéterminé (A₁), une suite (W₁) de mots de données, qui est transmise, à la cadence de travail du circuit à contrôler, au circuit de contrôle (7-14;17-30), que le comparateur (20) compare la suite transmise (W₁) de mots de données, à la fois du point de vue contenu et apparition dans le temps, à une suite prédéterminée (W₂) de mots de données, pour déterminer s'il y a coïncidence, et que lorsque la suite transmise (W₁) de mots de données diffère de la suite prédéterminée (W₂), le circuit de contrôle (7-14;17-30) déclenche un signal d'identification d'erreur et de débranchement.

8. Montage selon la revendication 7, caractérisé en ce que ce circuit est prévu pour une installation de freinage comportant une régulation électronique, par exemple ABS, ASR, FSR, et que le circuit à contrôler (1-5; 15) est agencé sous la forme d'un microcontrôleur monopuce, qui sert à évaluer des signaux d'entrée obtenus au moyen de cacteurs de roues et à produire des signaux de commande de la pression de freinage.
